# EUROPEAN PATENT APPLICATION

(11) **EP 2 157 657 A1**
(43) Date of publication of application: **24.02.2010**
(21) Application number: 07828902.2
(22) Date of filing: 01.10.2007
(51) Int. Cl.: H01M 10/44, H02J 7/34

(54) **POWER SYSTEM AND ASSEMBLED BATTERY CONTROLLING METHOD**

(30) Priority: 08.06.2007 JP 2007152305
(71) Applicant: Panasonic Corporation, Kadoma-shi Osaka 571-8501 (JP)
(72) Inventor: AOKI Mamoru c/o Panasonic Corporation IPROC, Osaka-shi Osaka 540-6207 (JP); SUGIYAMA, Shigeyukic/o Panasonic Corporation IPROC, Osaka-shi Osaka 540-6207 (JP); SUZUKI, Kohei c/o Panasonic Corporation IPROC, Osaka-shi Osaka 540-6207 (JP)
(74) Representative: Schwabe - Sandmair - Marx
(86) International application number: PCT/JP2007/069162
(87) International publication number: WO 2008/149475

(57) **Abstract**

A power supply system comprises: an assembled battery in which a plurality of cells are connected in series and which supplies power from a series circuit of the cells to a device; a power generator that parallely supplies generated power to the assembled battery and the device connected in parallel; a plurality of forced discharge units that cause the plurality of cells to forcibly discharge individually; a cell state detector that detects a state of each cell; and a controller which, when the cell state detector detects that at least one of the plurality of cells is in a first state showing that the cell is not fully charged, causes the cell detected to be in the first state to discharge by means of the forced discharge units until the cell state detector detects that the cell enters a second state having a lower state of charge than the first state.

## Description

### Technical Field

The present invention relates to a power supply system configured by an assembled battery having a combination of a plurality of cells, as well as to a control method of the assembled battery.

### Background Art

Alkaline storage batteries such as nickel-hydrogen storage batteries and nickel-cadmium storage batteries, and nonaqueous electrolyte secondary batteries such as lithium ion secondary batteries and lithium polymer secondary batteries have attracted attentions as the power supplies incorporated in vehicles and cellular phones, because of their higher energy density per unit weight than lead storage batteries. Especially when cells having a plurality of nonaqueous electrolyte secondary batteries are connected in series to configure an assembled battery with a high energy density per unit weight, and the assembled battery is mounted in a vehicle as a cell starter power supply (i.e., a power supply that is not a drive source of the vehicle) in place of a lead storage battery, the vehicle installed with the assembled battery is considered to be favorable for racing.

The cell starter power supply discharges at a large current upon the start-up of a vehicle, and is charged by receiving a current from a power generator when driving the vehicle. For example, in the case of high engine speed and higher electric generating capacity of the power generator than the power consumption of a load circuit, the assembled battery is charged and surplus power is absorbed, preventing damage to the load circuit caused by the supply of excess power to the load circuit.

On the other hand, when, for example, the engine speed drops due to the application of the brakes or the like and the electric generating power of the power generator becomes lower than the power consumption of the load circuit, a shortage of power is compensated by the discharge of the assembled battery, whereby the power supply to the load circuit is maintained.

As described above, a storage battery used as a power supply for a vehicle is charged by a power generator installed in a vehicle. The electric generating power of the power generator installed in the vehicle fluctuates according to the traveling condition of the vehicle. For this reason, the storage battery that is used as a power supply for a vehicle constantly needs to keep excess power in a chargeable state.

Such a conventional lead storage battery that is generally used as a power supply for a vehicle has a mechanism that does not damage the battery performance even when the battery is irregularly charged/discharged. However, for example, a nonaqueous electrolyte secondary battery such as a lithium ion secondary battery should not be overcharged due to its reaction mechanism. Specifically, when the nonaqueous electrolyte secondary battery is overcharged by the power generator while being in a so-called fully charged state where the state of charge (SOC) is nearly 100%, the electrolyte containing a nonaqueous electrolyte is decomposed and a positive-electrode active material is destabilized due to the overcharge, causing troubles to the safety around the nonaqueous electrolyte secondary battery.

The technology that uses the nonaqueous electrolyte secondary battery as a power supply for a vehicle has been developed mainly for the drive source of electric vehicles (including hybrid-type vehicles). The problem in the drive source of an electric vehicle is a fluctuation or imbalanced state of charge (SOC) between cells configuring an assembled battery. The occurrence of such unbalance is a problem not only in the assembled battery used as the drive source of the electric vehicle, but also in an assembled battery in which nonaqueous electrolyte secondary batteries or other storage batteries are connected in series.

Specifically, a plurality of cells are connected in series to configure a high-voltage assembled battery. As a result, even in an SOC region where there is no problem even when the assembled battery is charged continuously, the occurrence of an imbalance might cause overcharge of the cells having a larger SOC than other cells. Therefore, as described in Patent Document 1, there is known a technology for detecting a fluctuation of SOC between a plurality of cells and then reducing the variation of SOC between the cells by causing the cell having a particularly large fluctuation to discharge.

The technology described in Patent Document 1 has the steps of detecting the fluctuation of SOC between the plurality of cells, and causing the cell having a particularly large fluctuation to discharge. In the step of detecting the fluctuation of SOC, the fluctuation is detected in the region where the change rate of OCV (open circuit voltage) with respect to the SOC increases, that is, when the SOC is approximately 100%, and then the fluctuation of the SOC between the cells is reduced by causing the cell having a particularly large fluctuation to discharge.

However, as in the technology of Patent Document 1, when detecting the fluctuation after the SOC becomes approximately 100%, the SOC definitely becomes approximately 100% before the fluctuation is eliminated. When excess power is charged to the nonaqueous electrolyte secondary battery while the SOC becomes approximately 100%, the SOC eventually exceeds 100% and becomes overcharged.

On the other hand, when the OCV of the assembled battery increases and becomes equal to output voltage of a power generator due to the fact that the SOC becomes approximately 100% or when a charging/discharging path of the assembled battery is blocked for preventing overcharge of the assembled battery, the assembled battery cannot absorb the excess power of the power generator, and excess current is supplied from the power generator to other in-car electrically-powered equipment (lamps, car stereo system, car air conditioner, etc.), which might damage these electrically-powered equipment.
Patent Document 1: Japanese Patent Application Laid-open No. 2000-092732

### Disclosure of the Invention

An object of the present invention is to provide a power supply system, which, in an assembled battery composed of a plurality of cells, is capable of allowing the cells to be discharged and to absorb excess power of a power generator before the cells are fully charged and become unable to absorb the excess power. Another object of the present invention is to provide a control method of the assembled battery.

A power supply system according to one aspect of the present invention has: an assembled battery in which a plurality of cells are connected in series and which supplies power from a series circuit of the cells to a device; a power generator that parallely supplies generated power to the assembled battery and the device connected in parallel; a plurality of forced discharge units that cause the plurality of cells to forcibly discharge individually; a cell state detector that detects a state of each cell; and a controller which, when the cell state detector detects that at least one of the plurality of cells is in a first state showing that the cell is not fully charged, causes the cell detected to be in the first state to discharge by means of the forced discharge units until the cell state detector detects that the cell enters a second state having a lower state of charge than the first state.

Furthermore, a control method of an assembled battery according to one aspect of the present invention is a control method of an assembled battery for supplying power to a device from an assembled battery having a plurality of cells connected in series, the control method having: a step in which a power generator parallely supplies generated power to the assembled battery and the device; a step in which a plurality of forced discharge units cause the plurality of cells to forcibly discharge individually; a step in which a cell state detector detects a state of each cell; and a step in which, when the cell state detector detects that at least one of the plurality of cells is in a first state showing that the cell is not fully charged, a controller causes the cell detected to be in the first state to discharge by means of the forced discharge units until the cell state detector detects that the cell enters a second state having a lower state of charge than the first state.

According to this configuration, the assembled battery and the device are connected in parallel and the power generated by the power generator is parallely supplied to the assembled battery and the device, whereby charge of the assembled battery and supply of drive power to the device are carried out simultaneously. Then, when excess power exceeding power consumption of the device is charged to the assembled battery by the power generator and the cell state detector detects that any of the cells is in the first state showing that the cell is not fully charged, the forced discharge units discharge the cell until the cell enters the second state having a lower state of charge than the first state.

Therefore, the cell can be allowed to discharge so as to be able to absorb the excess power of the power generator, before the generated power is charged and overcharged when each cell is in a fully charged state, or before each cell is fully charged and therefore unable to absorb the excess power.

Moreover, detection of first state is performed for each cell. Therefore, even when the entire assembled battery is not fully charged due to an imbalance between the cells configuring the assembled battery, the cells are caused to discharge before the generated power is charged and overcharged when each cell is in a fully charged state, or before each cell is fully charged and therefore unable to absorb the excess power of the power generator. As a result, all of the cells can be allowed to absorb the excess power.

### Brief Description of the Drawings

[Fig. 1] Fig. 1 is a block diagram for explaining an example of a power supply system according to an embodiment of the present invention.
[Fig. 2] Fig. 2 is an enlarged view showing an assembled battery, switches, resistors, diodes and a controller of the power supply system shown in Fig. 1.
[Fig. 3] Fig. 3 is an explanatory diagram showing an example of an initial charge-discharge behavior of a lithium ion secondary battery - one example of a cell - at room temperature.
[Fig. 4] Fig. 4 is an enlarged view showing an assembled battery, switches, resistors, diodes, current detection resistors and a controller of a power supply system according to another embodiment.

### Best Mode for Carrying Out the Invention

The best mode for carrying out the present invention is now described hereinafter with reference to the drawings.

A power supply system according to a first embodiment is a power supply system that has: an assembled battery in which a plurality of cells are connected in series and which supplies power from a series circuit of the cells to a device; a power generator that parallely supplies generated power to the assembled battery and the device connected in parallel; a plurality of forced discharge units that cause the plurality of cells to forcibly discharge individually; a cell state detector that detects a state of each cell; and a controller which, when the cell state detector detects that at least one of the plurality of cells is in a first state showing that the cell is not fully charged, causes the cell detected to be in the first state to discharge by means of the forced discharge units until the cell state detector detects that the cell enters a second state having a lower state of charge than the first state.

According to this configuration, the assembled battery and the device are connected in parallel and the power generated by the power generator is parallely supplied to the assembled battery and the device, whereby charge of the assembled battery and supply of drive power to the device are carried out simultaneously. Then, when excess power exceeding power consumption of the device is charged to the assembled battery by the power generator and the cell state detector detects that any of the cells is in the first state showing that the cell is not fully charged, the forced discharge units discharge the cell until the cell enters the second state having a lower state of charge than the first state.

Therefore, the cell can be allowed to discharge so as to be able to absorb the excess power of the power generator, before the generated power is charged and overcharged when each cell is in a fully charged state, or before each cell is fully charged and therefore unable to absorb the excess power.

Moreover, detection of first state is performed for each cell. Therefore, even when the entire assembled battery is not fully charged due to an imbalance between the cells configuring the assembled battery, the cell is caused to discharge before the generated power is charged and overcharged when each cell is in a fully charged state, or before each cell is fully charged and therefore unable to absorb the excess power of the power generator. As a result, all of the cells can be allowed to absorb the excess power.

In addition, the cell state detector detects voltage of each cell as the state of the cell. The first state is a state where the voltage of the cell becomes forced discharge start voltage Va that is set in advance to be lower than voltage obtained when the cell is fully charged, while the second state is a state where the voltage of the cell becomes forced discharge end voltage Vb that is set in advance to be lower than the forced discharge start voltage Va.

In other words, the power supply system, which has an assembled battery having a combination of a plurality of cells and a power generator capable of charging the assembled battery, may have a plurality of forced discharge units capable of causing the cells to forcibly discharge individually, and a controller that, when an individually measured voltage of each cell reaches the forced discharge start voltage Va, causes the cells to forcibly discharge individually by means of the forced discharge units until the voltage of each cell reaches the forced discharge end voltage Vb.

According to this configuration, the forced discharge start voltage Va is set in advance at voltage lower than terminal voltage obtained when the cells are fully charged. When excess power exceeding power consumption of the device is charged to the assembled battery by the power generator and the cell state detector detects that the terminal voltage of each cell has reached the forced discharge start voltage Va, the cell whose terminal voltage has reached the forced discharge start voltage Va is caused to discharge by the forced discharge units until the terminal voltage is reduced to the forced discharge end voltage Vb.

In this case, because the cell state detector can the first and second states based on the terminal voltage of each cell, the cell state detector can be simplified easily.

A power supply system according to a second embodiment is, according to the power supply system according to the first embodiment, a power supply system in which each forced discharge unit is configured by a forced discharge circuit composed of a resistor and diode, and by a switch that connects the cell to the forced discharge circuit on the basis of a command from the controller.

Each of the forced discharge units has the forced discharge circuit in which a series circuit of a resistor and diode is connected with each cell in parallel, wherein the diode is connected in a direction such that discharging current of each cell flows in a forward direction of the diode. Each of the forced discharge units also has the switch that is connected with the forced discharge circuit in series and opens/closes the connection between the forced discharge circuit and the cell on the basis of a command from the controller.

According to this configuration, the controller can cause the cells to discharge individually, by turning on the switch of the forced discharge unit connected to each cell in parallel. Further, the following effects can be achieved by connecting the diodes in a direction where the discharging current of the corresponding cells flow.

First of all, the first effect of the diodes is that when a certain cell is caused to forcibly discharge by turning the switch on, current that is supplied from another cell to the device is prevented from flowing through the forced discharge circuit whose switch is on. If the forced discharge circuit has no diode, when the switch is turned on, current that is supplied from another cell to the device flows through the forced discharge circuit. As a result, power loss is caused by the resistor of the forced discharge circuit. However, because the forced discharge circuit has a diode, the power supplied from another cell to the device can be prevented from being consumed by the resistor even when the switch is on.

Next is described the second effect of the diodes. If the forced discharge circuit has no diode, when the switch cannot be turned off due to failure of the controller or the switch, the cell that are connected in parallel to the forced discharge circuit having the switch are caused to forcibly discharge until the terminal voltage thereof becomes 0V, causing an over-discharge state. However, because the forced discharge circuit has a diode, discharge of the cells is restricted by the drop of the voltage of the diode in the forward direction even when the switch cannot be turned off. Because diodes of which voltage drop in the forward direction is approximately 0.4V to 1.0V are available, the possibility that the cells are be caused to over-discharge and deteriorated when the switch cannot be turned off due to its failure can be reduced by appropriately setting the drop of the voltage of the diode in the forward direction.

A power supply system according to a third embodiment is, according to the power supply system according to the first or second embodiment, is a power supply system that uses a nonaqueous electrolyte secondary battery as each of the cells. Because the nonaqueous electrolyte secondary battery has a higher energy density per unit weight than a lead storage battery, the power supply system can be easily reduced in size and increased in capacity. However, the nonaqueous electrolyte secondary battery produces a larger demerit than the lead storage battery when being overcharged. However, according to the power supply system of the third embodiment, the nonaqueous electrolyte secondary battery used as the cell is discharged before being fully charged. Thus, it is possible to easily achieve size reduction and capacity increase of the power supply system while reducing the possibility that the nonaqueous electrolyte secondary battery is over-discharged.

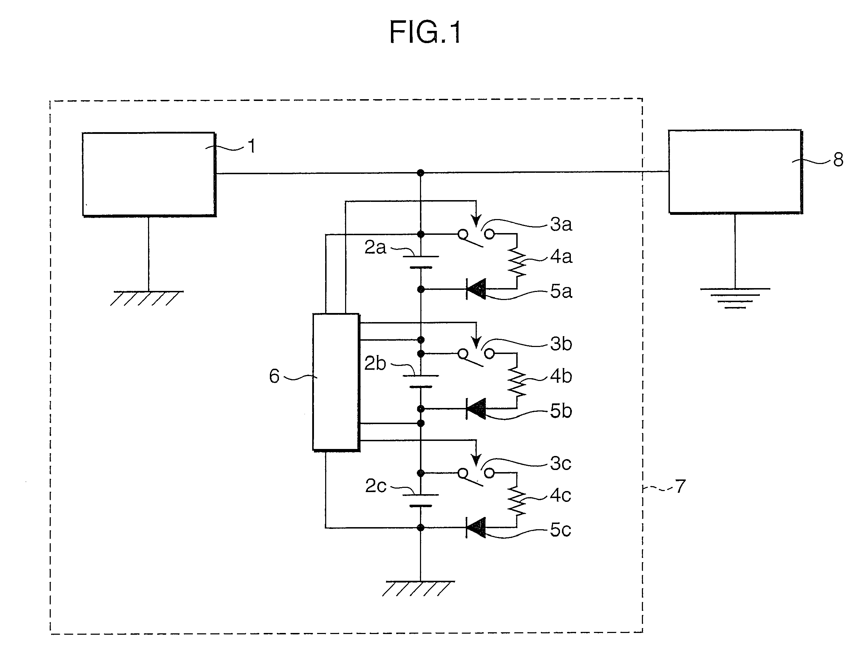

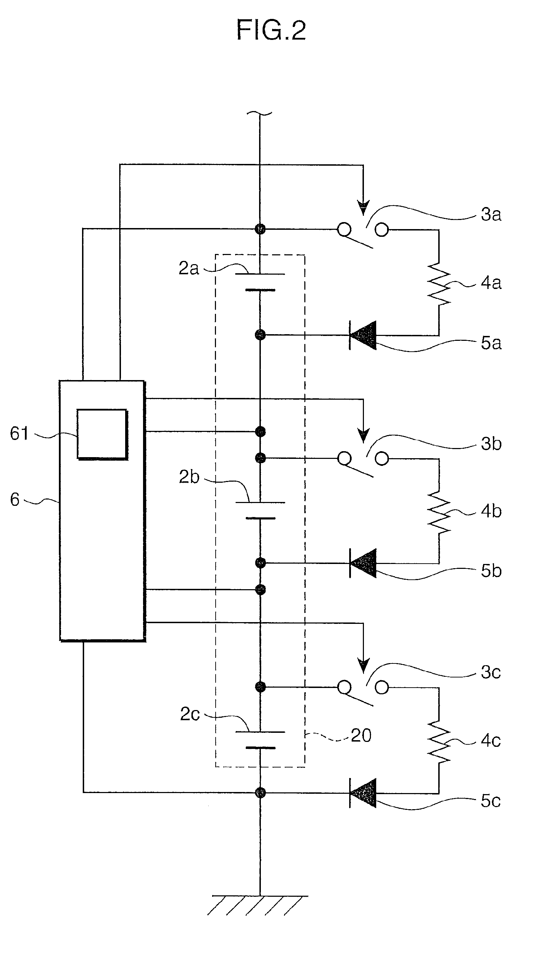

Fig. 1 is an explanatory diagram for illustrating an example of a configuration of the power supply system according to first to third embodiments and fourth to fifteenth embodiments. A power supply system 7 shown in Fig. 1 is, for example, an in-car cell starter power supply. Fig. 2 is an enlarged view showing an assembled battery, switches, resistors, diodes and a controller of the power supply system 7 shown in Fig. 1.

The power supply system 7 has a power generator 1, an assembled battery 20 in which cells 2a, 2b and 2c are connected in series, a plurality of forced discharge units capable of causing the cells 2a, 2b and 2c to forcibly discharge individually, and a controller 6 that measures voltage of the cells 2a, 2b and 2c individually and, when the voltage of the cells reaches the forced discharge start voltage Va, uses the forced discharge units to cause the cells to forcibly discharge individually until the voltage thereof reaches the forced discharge end voltage Vb. Note that the plurality of the cells may be connected in parallel.

The controller 6 is a control circuit that is configured by, for example, a voltage detection circuit 61 (cell state detector), microcomputer, logic circuit, and the like. The voltage detection circuit 61 is configured by, for example, an AD (analog/digital) converter for detecting the terminal voltage of each of the cells 2a, 2b and 2c, a comparator, and the like.

Also, each of the forced discharge units has a forced discharge circuit and switches 3a, 3b and 3c for connecting the cells 2a, 2b and 2c to the forced discharge circuit on the basis of a command from the controller 6. The forced discharge circuit has resistors 4a, 4b and 4c and diodes 5a, 5b and 5c. The switches 3a, 3b and 3c are each configured by a switching element, such as FET (Field Effect Transistor).

Note that the number of cells may not be limited to three and therefore may be the same as the number of resistors, diodes or switches.

A series circuit of the switch 3a, the resistor 4a and the diode 5a is connected to the cell 2a in parallel. A series circuit of the switch 3b, the resistor 4b and the diode 5b is connected to the cell 2b in parallel. A series circuit of the switch 3c, the resistor 4c and the diode 5c is connected to the cell 2c in parallel. The cathodes of the diodes 5a, 5b and 5c are connected to the negative electrodes of the cells 2a, 2b and 2c respectively.

In addition, an in-car device 8, an example of a load, is connected to the power supply system 7. The in-car device 8 is a load device, such as a cell starter for starting the engine of a vehicle, a light, a car navigation device, or the like. The positive electrode of the assembled battery 20, which is the positive electrode of the cell 2a, is connected to the in-car device 8, whereby discharging current of the assembled 20 is supplied to the in-car device 8.

The power generator 1 is, for example, a constant-voltage power generator that is installed in a vehicle and generates power by means of the rotational motion of the engine. A voltage output terminal of the power generator 1 is connected to the positive electrode of the cell 2a and the in-car device 8. In this case, the assembled battery and the in-car device 8 are connected in parallel as viewed from the power generator 1. Voltage generated by the power generator 1 is parallely supplied to the assembled battery 20 and the in-car device 8.

Therefore, when there is excess generated power of the power generator 1, the voltage generated by the power generator 1 is applied to both ends of the assembled battery 20, whereby the assembled battery 20 is charged at constant voltage. When the generated power of the power generator 1 is insufficient, power is supplied from the assembled battery to the in-car device 8.

Next is described a case where a constant-voltage power generator is used as the power generator 1 and a nonaqueous electrolyte secondary battery (i.e. a lithium ion secondary battery) is used as each of the cells 2a, 2b and 2c.

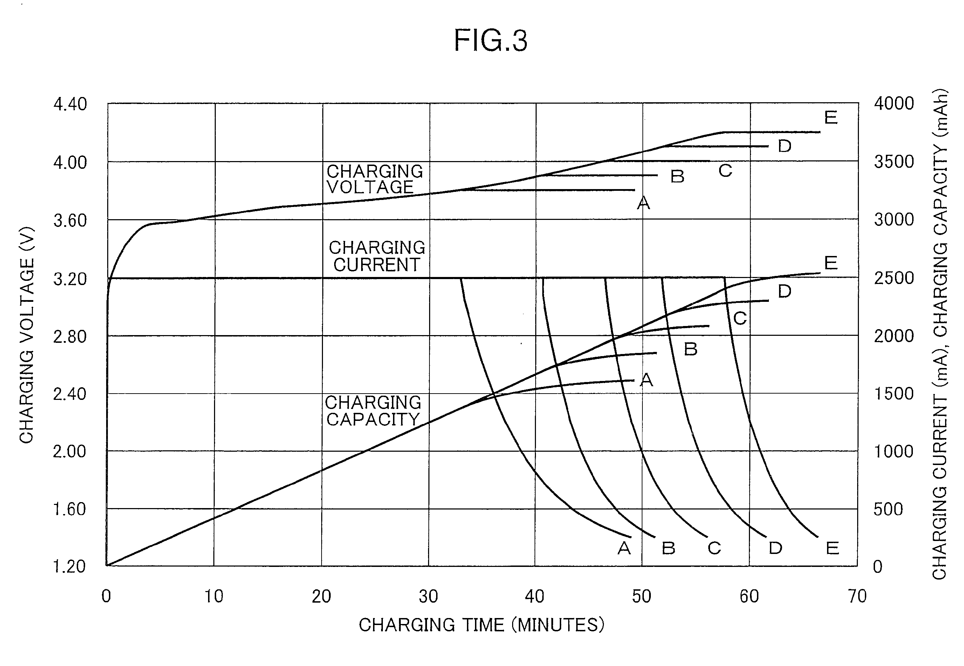

Fig. 3 is an explanatory diagram showing an example of an initial charge-discharge behavior that is obtained when a lithium ion secondary battery having lithium cobaltate as a positive-electrode active material and black lead as a negative-electrode active material is charged by a constant-voltage power generator. In this diagram, the graph showing that regular voltage per cell is 3.8V is represented by a letter A, the graph showing 3.9V as the regular voltage by a letter B, the graph showing 4.0V as the regular voltage by a letter C, the graph showing 4.1V as the regular voltage by a letter D, and the graph showing 4.2V as the regular voltage by a letter E.

The power generator 1 charges the lithium ion secondary battery at constant current until the voltage thereof reaches the regular voltage, and charges the lithium ion secondary battery at constant voltage while attenuating the current. For example, as shown by the graph B in Fig. 3, when output regular voltage of the power generator 1 is 3.9V per lithium ion secondary battery, SOC (a value obtained by dividing a charging capacity where the regular voltage per cell is 3.9V by a charging capacity where the regular voltage per cell is 4.2V) becomes 73%. However, as shown by the graph D, when the regular voltage of the power generator is 4.1V per lithium ion secondary battery, the SOC becomes 91%. (Table 1) shows the relationship between the regular voltage (terminal voltage of each cell) of the power generator per lithium ion secondary battery (cell) and the SOC on the basis of Fig. 3.

**[Table 1]**

| | | | | | | | | | |
|---|---|---|---|---|---|---|---|---|---|
| Regular voltage of the power generator per cell (V) | 4.2 | 4.15 | 4.1 | 4.05 | 4.0 | 3.95 | 3.9 | 3.85 | 3.8 |
| SOC (%) | 100 | 95.5 | 91 | 86.5 | 82 | 77.5 | 73 | 68.5 | 64 |

In the lithium ion secondary battery, when the SOC after charging becomes approximately 100%, the electrolyte component (mainly carbonate) containing a nonaqueous electrolyte is decomposed easily. In the third embodiment, in order to avoid providing any more charging current from the power generator to the lithium ion secondary battery in such a state, the forced discharge start voltage Va is set at voltage slightly lower than the voltage that shows that the SOC is approximately 100% after charging, and at the same time the controller 6 measures the voltages of the individual lithium ion secondary batteries successively. When the voltage of any of the lithium ion secondary batteries reaches the forced discharge start voltage Va as a result of charging by the power generator 1, the cells are caused to forcibly discharge by forced discharge units on the basis of a command from the controller 6 until the voltage of the corresponding reaches the forced discharge end voltage Vb.

Next, an example of an operation of the power supply system according to the present invention is described as an example where the cell 2a reaches the forced discharge start voltage Va first.

Using the voltage detection circuit 61, the controller 6 measures, successively and individually, the voltages of the cells 2a, 2b and 2c configuring the assembled battery 20. Charging current is supplied irregularly from the power generator 1 to the assembled battery 20. Here, when the SOC of the cell 2a becomes higher than those of the cells 2b and 2c for some reason (due to, for example, the difference in weight between the active materials contained in the battery) and the voltage thereof reaches the forced discharge start voltage Va, the switch 3 a is turned on while the switches 3b and 3c stay off, based on a command from the controller 6. Consequently, while the charging current is kept supplied to the assembled battery 20 itself, only the cell 2a is caused to forcibly discharge through the forced discharge circuit configured by the resistor 4a and the diode 5a, until the voltage reaches the forced discharge end voltage Vb, whereby the SOC decreases. Once the forced discharge is finished, the switch 3a is turned off based on a command from the controller 6 so that the cell 2a is ready to be charged by the power generator 1.

Even during the forced discharge of the cell 2a, the terminal voltages of the cells 2b and 2c are less than the forced discharge start voltage Va, the battery capacity is sufficient, and the cell 2b,2c are ready to be charged by the power generator 1. Therefore, it is possible to avoid a situation where the charging current cannot be absorbed by the assembled battery 20 and is supplied excessively to the in-car device 8. Furthermore, even when the terminal voltage of the cell 2b or 2c reaches the forced discharge start voltage Va and thereby forced discharge thereof is started after the forced discharge of the cell 2a is finished, at least the cell 2a has sufficient battery capacity from the previous forced discharge. Hence, the cell 2a becomes ready to be charged by the power generator 1 and, as a result, the charging current is prevented from being supplied excessively to the in-car device 8.

A power supply system according to a fourth embodiment uses, according to the power supply system according to the third embodiment, a lithium composite oxide that contains cobalt as the positive-electrode active material of the nonaqueous electrolyte secondary battery. By using a lithium composite oxide having lithium cobaltate or other cobalt, as the positive-electrode active material, discharge voltage of the nonaqueous electrolyte secondary battery rises and the energy density increases easily.

In a power supply system according to a fifth embodiment, according to the power supply system of the third or fourth embodiment, the forced discharge start voltage Va (voltage showing the first state) is set to at least 4.05V but no more than 4.15V for one cell. As is clear from Fig. 3 and (Table 1), it is not preferable to set the forced discharge start voltage Va at voltage less than 4.05V per cell, because the charge acceptable amount of the cell becomes excessively small. Further, it is also not preferable to set the forced discharge start voltage at voltage exceeding 4.15V per cell, because forced discharge of the cell cannot be started until the forced discharge start voltage Va reaches an overcharge region.

In a power supply system according to a sixth embodiment is, according to the power supply system of any one of the third to fifth embodiments, the forced discharge end voltage Vb (voltage showing the second state) is set to at least 3.85V but no more than 3.95V per cell. As is clear from Fig. 3 and (Table 1), it is not preferable to set the forced discharge end voltage Vb at voltage less than 3.85V per cell, because the amount of electricity for forced discharge becomes excessively high (the time for each forced discharge increases), and charging current from a charger 1 is accepted by a small number of cells at all times. Moreover, it is not preferable to set the forced discharge end voltage Vb at voltage exceeding 3.95V per cell, because the charge acceptable amount of the cell becomes excessively small.

As shown in Table 1, when the terminal voltage of each cell is 4.15V, the SOC is 95.5%. When the terminal voltage of each cell is 4.05V, the SOC is 86.5%. Therefore, the first state is a state where the state of charge of each cell is within the range of 86.5% to 95.5%, while the second state is a state where the state of charge of each cell is within the range of 68.5% to 77.5%.

In a power supply system according to a seventh embodiment, according to the power supply system of any one of the first to sixth embodiments, the amount of electricity required for the forced discharge is calculated from the forced discharge start voltage Va and the forced discharge end voltage Vb, and the forced discharge is carried out with a constant current value for a constant period of time.

When the voltage of at least one of the cells detected by the cell state detector becomes the forced discharge start voltage Va, the controller uses the forced discharge units to cause the cell, whose voltage becomes the forced discharge start voltage Va, to discharge a previously set amount of discharge electricity with a previously set constant current value for a previously set constant period of time, the set amount of discharge electricity being set as an amount of discharge electricity for reducing the voltage of the cell from the forced discharge start voltage Va to the forced discharge end voltage Vb.

According to this configuration, even when large-current discharge occurs in the device and the voltage of the cells drops to the forced discharge end voltage Vb during the forced discharge of the cells, the forced discharge is continued regardless of the drop of the voltage of the cells. Therefore, the cell having a greater state of charge than the other cells can be caused to discharge more than the other cells by the set amount of discharge electricity, so that the imbalance can be reduced more reliably.

Furthermore, according to the power supply system 7 shown in Fig. 1, the cells 2a, 2b and 2c can be caused to discharge at constant current via the resistors 4a, 4b and 4c by turning the switches 3a, 3b and 3c on.

In addition, the cell state detector detects the voltage of each cell as the state of the cell. The first state is a state where the voltage of the cell becomes the forced discharge start voltage Va that is set in advance to be lower than voltage obtained when the cell is fully charged, while the second state is a state where the voltage of the cell becomes the forced discharge end voltage Vb that is set in advance to be lower than the forced discharge start voltage Va. When the voltage of at least one of the plurality of cells detected by the cell state detector becomes the forced discharge start voltage Va, the controller may turn on the switch connected with the forced discharge circuit that is connected in parallel with the cell having the forced discharge start voltage Va, during a set time period that is set in advance as a time period for reducing the voltage of the cell from the forced discharge start voltage Va to the forced discharge end voltage Vb by turning the switch on.

When the switches 3a, 3b and 3c are turned on, although the cells 2a, 2b and 2c are caused to discharge at substantially constant current, the discharge current decreases due to the drop of the voltage caused by the discharge. Therefore, the discharging current is not necessarily constant. For example, the switches 3a, 3b and 3c are turned on, and the time required for reducing the voltage of the cells 2a, 2b and 2c from the forced discharge start voltage Va to the forced discharge end voltage Vb is experimentally measured in advance. This time is used as the set time period so that the forced discharge can be carried out more accurately.

Next is described in detail the power supply system according to the seventh embodiment on the basis of Fig. 3 and (Table 1), assuming the case where the forced discharge start voltage Va is set at 4.1V and the forced discharge end voltage Vb is set at 3.9V. When the voltage of any of the cells 2a, 2b and 2c reaches 4.1V, the controller 6 is caused to understand the relationships shown in (Table 1), as well as the amount of electricity (18% in this case) used for the forced discharge of the cell that is obtained from the difference between the SOCs, rather than performing the forced discharge while successively measuring the voltages until the voltage of the cell reaches the 3.9V. Then, the controller 6 controls the time such that, for example, the forced discharge for the amount of electricity is carried out for 54 minutes at 5-hour rate regardless of whether charge is performed from the power generator or discharge is performed to the in-car device, whereby the cell can be caused to forcibly discharge simply and reliably.

This aspect is effective when discharge is performed to the in-car device 8 at large current and consequently closed circuit voltage drops drastically (voltage that is extremely lower than open circuit voltage corresponding to the actual SOC of the cell due to the resistance of the cell).

Specifically, in the case where the forced discharge is performed while successively measuring the voltages until the voltage of the cell reaches 3.9V, when the terminal voltage drops to 3.9V due to large-current discharge to the in-car device 8 during the forced discharge of the cell, the forced discharge might end although the forced discharge is not performed on the cell sufficiently.

However, according to the power supply system of the seventh embodiment, once the forced discharge is started, the set amount of discharge electricity that is previously set at the amount of discharge electricity for reducing the voltage of the cell from the forced discharge start voltage Va to the forced discharge end voltage Vb is discharged by control of the time. Thus, regardless of the presence/absence of discharge to the in-car device 8, the set amount of discharge electricity is discharged and a sufficient amount of electricity for accepting charge can be secured.

A power supply system according to an eighth embodiment has: an assembled battery in which a plurality of cells are connected in series and which supplies power from a series circuit of the cells to a device; a power generator that parallely supplies generated power to the assembled battery and the device connected in parallel; a plurality of forced discharge units that cause the plurality of cells to forcibly discharge individually; a cell state detector that detects a state of each cell; and a controller which, when the cell state detector detects that at least one of the plurality of cells is in a first state showing that the cell is not fully charged, causes the cell detected to be in the first state to discharge by means of the forced discharge units until the cell state detector detects that the cell enters a second state having a lower state of charge than the first state.

The power supply system according to an eighth embodiment is also a power supply system that has an assembled battery having a combination of a plurality of cells and a power generator capable of charging the assembled battery, the power supply system further having a plurality of forced discharge units capable of causing the cells to forcibly discharge individually, and a controller which, when the state of charge of the individually grasped cells reaches a forced discharge start state Ca, uses the forced discharge units to cause the cells to forcibly discharge individually until the state of charge of reaches a forced discharge end state Cb.

Then, the cell state detector detects the state of charge of each cell as the state of each cell. The first state is a state where the state of charge of the cell becomes the forced discharge start state Ca that is previously set at the state of charge showing that the cell is not fully charged. The second state is a state where the state of charge of the cell becomes the forced discharge end state Cb that is previously set as the state of charge less than the forced discharge start state Ca.

According to this configuration, the forced discharge start state Ca is set at the state of charge showing that the cell is not fully charged. Then, excess power exceeding power consumption of the device is charged to the assembled battery by the power generator, and when the cell state detector detects that the state of charge of the cell reaches the forced discharge start state Ca, the cell whose state of charge reaches the forced discharge start state Ca is caused to discharge by the forced discharge units until the state of charge drops to the forced discharge end state Cb.

In this case, the cell state detector detects not the state of charge of each cell indirectly from the terminal voltage of each cell, but the state of charge of each cell directly from the terminal voltage. Therefore, the controller can improve the accuracy of control of a discharging operation performed by the forced discharge units.

In a power supply system according to a ninth embodiment, according to the power supply system of the eighth embodiment, the state of charge of the cell is calculated from an initial charge behavior. The cell state detector has a current detector for detecting charging/discharging current flowing through each cell, and a charge state calculator for calculating the state of charge of each cell by cumulatively adding the charging current and subtracting the discharging current, for each of the cells, the charging current and the discharging current being detected by the current detector.

According to this configuration, by cumulatively adding the charging current and subtracting the discharging current for each cell, a charge amount that is actually charged in each cell can be calculated, and the state of charge of each cell can be calculated. Thus, accuracy of detection of the state of charge can be improved.

The current detector further has a plurality of current detection resistors that are connected with the plurality of cells in series, and a current signal detector that acquires voltage between both ends of each of the current detection resistors as a signal indicating charging/discharging current flowing to each cell. The forced discharge circuits are respectively connected in parallel to a plurality of series circuits configured by the cell and the current detection resistor.

According to this configuration, when the charging/discharging current flows to each cell, a voltage drop associated with the charging/discharging current occurs in each current detection resistor. At this moment, because the forced discharge circuits are connected in parallel to the series circuits configured by the cells and the current detection resistors, current discharged by the forced discharge circuits flows only to, out of the current detection resistors, the current detection resistor that is connected in series with the cell that was forcibly discharged by the forced discharge circuit.

As a result, the voltage drop caused in each current detection resistor, that is, the voltage between both ends of each current detection resistor, becomes a signal showing the charging/discharging current flowing to each cell. Therefore, the current signal detector acquires the voltage between both ends of each current detection resistor as the signal showing the charging/discharging current flowing to each cell, whereby the charging/discharging current flowing to each cell can be detected.

A power supply system according to a tenth embodiment is, according to the power supply system of the eighth or ninth embodiment, configured by a forced discharge circuit composed of a resistor and a diode, and a switch connecting the cell with the forced discharge circuit on the basis of a command from the controller.

In a power supply system according to an eleventh embodiment, according to the power supply system of any one of the eighth to tenth embodiments, a nonaqueous electrolyte secondary battery is used as each cell.

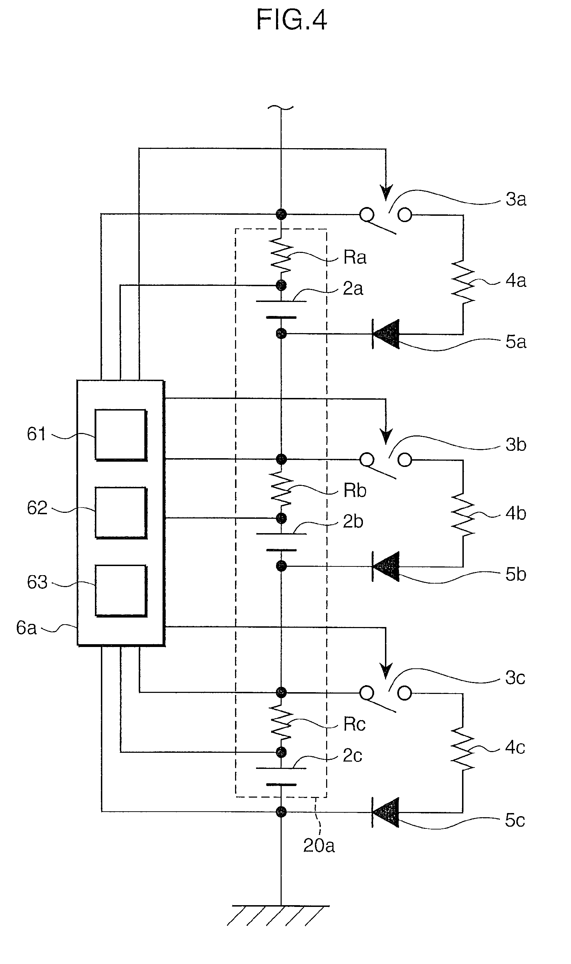

Fig. 4 is an enlarged view showing an assembled battery 20a, switches 3a, 3b and 3c, resistors 4a, 4b and 4c, diodes 5a, 5b and 5c, current detection resistors Ra, Rb and Rc, and a controller 6a of the power supply system according to any one of the eighth to fifteenth embodiments.

The assembled battery 20a and controller 6a shown in Fig. 4 are structurally different from the assembled battery 20 and controller 6 shown in Fig. 2. The other configurations of the power supply system according to the eighth to fifteenth embodiments are the same as those of the power supply system 7 shown in Fig. 1, and hence the description thereof is omitted.

In the assembled battery 20a shown in Fig. 4, the current detection resistor Ra and the cell 2a are connected in series, and the cell 2a is connected with the cell 2b in series via the current detection resistor Rb. The cell 2b is connected with the cell 2c in series via the current detection resistor Rc. The current detection resistors Ra, Rb and Rc are so-called shunt resistors.

The series circuit configured by the current detection resistor Ra and the cell 2a is connected in parallel to a series circuit of the switch 3a, resistor 4a and diode 5a. A series circuit configured by the current detection resistor Rb and cell 2b is connected in parallel with a series circuit configured by the switch 3b, resistor 4b and diode 5b. Furthermore, a series circuit of the current detection resistor Rc and cell 2c is connected in parallel with a series circuit of the switch 3c, resistor 4c and diode 5c.

Unlike the controller 6 shown in Fig. 2, the controller 6a shown in Fig. 4 further has a current signal detector 62 and a charge state calculator 63. In this case, the current detection resistors Ra, Rb and Rc and the current signal detector 62 correspond to an example of the current detector.

For example, the current signal detector 62 is configured by an AD converter that converts the voltage between both ends of each of the current detection resistors Ra, Rb and Rc into a digital value. Also, for example, a microcomputer of the controller 6a functions as the charge state calculator 63 by executing a predetermined control program.

As shown in Table 1, for example, the controller 6a uses a ROM (Read Only Memory) or other storage element to store a LUT (Look Up Table) that associates the terminal voltage of each of the cells 2a, 2b and 2c with SOC.

When the controller 6a is activated by connecting the assembled battery 20a with the controller 6a at the time of manufacture, the controller 6a acquires the terminal voltage of each of the cells 2a, 2b and 2c detected by the voltage detection circuit 61. The controller 6a then refers to the LUT and converts the terminal voltage of each of the cells 2a, 2b and 2c into the SOC of each of the cells 2a, 2b and 2c.

The charge state calculator 63 stores thus obtained SOC in, for example, a RAM (Random Access Memory), EEPROM (Electrically Erasable and Programmable Read Only Memory) or other storage element, as an initial value of the SOC of each of the cells 2a, 2b and 2c. The charge state calculator 63 thereafter calculates the state of charge of the cells 2a, 2b and 2c by cumulatively adding the charging current and subtracting the discharging current for each of the cells 2a, 2b and 2c, the charging current and the discharging current being detected by the current signal detector 62.

When the nonaqueous electrolyte secondary battery such as a lithium ion secondary battery repeats charge/discharge, the relationship between charging voltage and SOC tends to change due to deterioration of the positive-electrode or negative-electrode active material. Therefore, when the beginning and the end of the forced discharge are controlled by the abovementioned controller 6 on the basis of the forced discharge start voltage Va and the forced discharge end voltage Vb, the forced discharge might be started or ended at the state of charge different from the intended state of charge.

The initial SOC of each of the cell 2a, 2b and 2c is stored in the controller 6a in association with (Table 1), and the SOCs of the cells 2a, 2b and 2c are successively obtained based on the amount of charge/discharge electricity integrated from the initial value. When the state of charge of each of the cells 2a, 2b and 2c reaches the forced discharge start state Ca, the switches 3a, 3b and 3c and the resistors 4a, 4b and 4c (forced discharge units) to cause the cells 2a, 2b and 2c to forcibly discharge individually until the state of charge reaches the forced discharge end state Cb.

As a result, charge/discharge of the cells 2a, 2b and 2c can be carried out based on the SOC calculated regardless of a change in the relationship between the terminal voltage and SOC that is caused by a repetition of charge/discharge. Therefore, it is possible to improve the accuracy of maintaining the state of charge of each of cells 2a, 2b and 2c at the intended state of charge, that is, the state of charge at which charge from the power generator 1 can be accepted sufficiently.

Note that the configuration and the operation of the power supply system of the eighth to tenth embodiments are the same as the configuration and the operation of the power supply system of the first and second embodiments, except for the difference in control between the controller 6 and the controller 6a (the fact that the timing for starting or ending the forced discharge is set using a SOC value) and the fact that the current detection resistors Ra, Rb and Rc are added. In addition, examples of a method for calculating the SOC include a method for successively reading charging/discharging current values from the shunt resistors corresponding respectively to the cells 2a, 2b and 2c, transmitting to the controller 6a the read charging/discharging current values, integrating the amounts of charge/discharge electricity, and converting the result into SOC.

In a power supply system according to a twelfth embodiment, according to the power supply system of the eleventh embodiment, a lithium composite oxide that contains cobalt is used as a positive-electrode active material of the nonaqueous electrolyte secondary battery. The configuration and effects of the power supply system according to the twelfth embodiment are the same as those of the power supply system according to the fourth embodiment.

A power supply system according to a thirteenth embodiment is, according to the power supply system of any one of the eighth to twelfth embodiments, a power supply system in which the forced discharge start state Ca is set to at least 86.5% but no more than 95.5% per cell. As is clear from (Table 1), it is not preferable to set the forced discharge start state Ca atvalue less than 86.5%, because the charge acceptable amount of the cell becomes excessively small. Further, it is also not preferable to set the forced discharge start state at value exceeding 95.5% per cell, because forced discharge of the cell cannot be started until the state of charge reaches an overcharge region.

A power supply system according to a fourteenth embodiment is, according to the power supply system of any one of the eighth to thirteenth embodiments, a power supply system in which the forced discharge end state Cb is set to at least 68.5% but no more than 77.5% per cell. As is clear from (Table 1), it is not preferable to set the forced discharge end state Cb at value less than 68.5%, because the amount of electricity required for the forced discharge becomes excessively high (the time for each forced discharge increases), and charging current from the charger 1 is accepted by a small number of cells at all times. Moreover, it is not preferable to set the forced discharge end state Cb at value exceeding 77.5%, because the charge acceptable amount of the cell becomes excessively small.

A power supply system according to a fifteenth embodiment is, according to the power supply system of any one of the eighth to fourteenth embodiments, is a power supply system in which the amount of electricity required for the forced discharge is calculated from the forced discharge start state Ca and the forced discharge end state Cb, and the forced discharge is carried out with a constant current value for a constant period of time.

When the state of charge of at least one of the cells detected by the cell state detector becomes the forced discharge start state Ca, the controller uses the forced discharge units to cause the cell, whose state of charge becomes the forced discharge start state Ca, to discharge a previously set amount of discharge electricity with a previously set constant current value for a previously set constant period of time, the set amount of discharge electricity being set as an amount of discharge electricity for reducing the state of charge of the cell from the forced discharge start state Ca to the forced discharge end state Cb.

According to this configuration, even when large-current discharge occurs in the device and the voltage of the cells drops to the forced discharge start state Ca during the forced discharge of the cell, the forced discharge is continued regardless of the amount of charge/discharge of the cell. Therefore, the cell having a greater state of charge than the other cells can be caused to discharge more than the other cells by the set amount of discharge electricity, so that the imbalance can be reduced more reliably.

In this case, when the switches 3a, 3b and 3c shown in Fig. 4 are turned on, the cells 2a, 2b and 2c can be caused to discharge at substantially constant current via the resistors 4a, 4b and 4c.

The cell state detector detects the state of charge of each cell as the state of each cell. The first state is a state where the state of charge of the cell becomes the forced discharge start state Ca that is previously set at the state of charge at which the cell is not fully charged. The second state is a state where the state of charge of the cell becomes the forced discharge end state Cb that is previously set as the state of charge less than the forced discharge start state Ca. When the state of charge of at least one of the plurality of cells detected by the cell state detector becomes the forced discharge start state Ca, the controller turns on the switch connected with the forced discharge circuit that is connected in parallel with the cell having the forced discharge start state Ca, during a set time period that is set in advance as a time period for reducing the state of charge of the cell from the forced discharge start state Ca to the forced discharge end state Cb by turning the switch on.

When the switches 3a, 3b and 3c are turned on, although the cells 2a, 2b and 2c are caused to discharge at substantially constant current, the discharge current decreases due to the drop of the voltage caused by the discharge. Therefore, the discharging current is not necessarily constant. For example, the switches 3a, 3b and 3c are turned on, and the time required for reducing the state of charge of the cells 2a, 2b and 2c from the forced discharge start state Ca to the forced discharge end state Cb is experimentally measured in advance. This time is used as the set time period so that the forced discharge can be carried out more accurately.

Next is described in detail the power supply system according to the fifteenth embodiment on the basis of (Table 1), assuming the case where the forced discharge start state Ca is set at 91% and the forced discharge end state Cb is set at 73%. When the SOC of any of the cells 2a, 2b and 2c reaches 91%, the controller 6 is caused to understand the amount of electricity (18% in this case) used for the forced discharge of the cell from the difference between the SOCs, rather than performing the forced discharge while successively measuring the SOCs until the SOC of the cell reaches the 73%. Then, the controller 6 controls the time such that, for example, the forced discharge for the amount of electricity is carried out for 54 minutes at 5-hour rate regardless of whether charge is performed from the power generator or discharge is performed to the in-car device, whereby the cell can be caused to forcibly discharge simply and reliably.

A control method of an assembled battery according to a sixteenth embodiment is a control method of an assembled battery having a combination of a plurality of cells, wherein when an individually measured voltage of each cell reaches the forced discharge start voltage Va, the cells are caused to forcibly discharge individually until the voltage of each cell reaches the forced discharge end voltage Vb.

More specifically, the method is a control method of an assembled battery for supplying power to a device from an assembled battery having a plurality of cells connected in series, the control method having: a step in which a power generator parallely supplies generated power to the assembled battery and the device; a step in which a cell state detector detects a state of each cell; and a step in which, when the cell state detector detects that at least one of the plurality of cells is in a first state showing that the cell is not fully charged, a controller causes the cell detected to be in the first state to discharge by means of a forced discharge unit until the cell state detector detects that the cell enters a second state having a lower state of charge than the first state.

The configuration and effects of the control method of an assembled battery according to the sixteenth embodiment are the same as those described in the first embodiment.

A control method of an assembled battery according to a seventeenth embodiment is, according to the control method of an assembled battery of the sixteenth embodiment, a method for performing forced discharge by using a forced discharge circuit configured by a resistor and a diode, and a switch that connects the cells with the forced discharge circuit on the basis of a forced discharge command. The configuration and effects of the control method of an assembled battery according to the seventeenth embodiment are the same as those described in the second embodiment.

A control method of an assembled battery according to an eighteenth embodiment is, according to the control method of an assembled battery of the sixteenth or seventeenth embodiment, a method in which a nonaqueous electrolyte secondary battery is used as each cell. The configuration and effects of the control method of an assembled battery according to the eighteenth embodiment are the same as those described in the third embodiment.

A control method of an assembled battery according to a nineteenth embodiment is, according to the control method of an assembled battery of the eighteenth embodiment, a method that uses a lithium composite oxide that contains cobalt as the positive-electrode active material of the nonaqueous electrolyte secondary battery. The configuration and effects of the control method of an assembled battery according to the nineteenth embodiment are the same as those described in the fourth embodiment.

A control method of an assembled battery according to a twentieth embodiment is, according to the control method of an assembled battery of the eighteenth or nineteenth embodiment, a method in which the forced discharge start voltage Va is set to at least 4.05V but no more than 4.15V per cell. The configuration and effects of the control method of an assembled battery according to the twentieth embodiment are the same as those described in the fifth embodiment.

A control method of an assembled battery according to a twenty-first embodiment is, according to the control method of an assembled battery of any one of the eighteenth to twentieth embodiments, a method in which the forced discharge end voltage Vb is set to at least 3.85V but no more than 3.95V per cell. The configuration and effects of the control method of an assembled battery according to the twenty-first embodiment are the same as those described in the sixth embodiment.

A control method of an assembled battery according to a twenty-second embodiment is, according to the control method of an assembled battery of any one of the sixteenth to twenty-first embodiments, a method for calculating the amount of electricity required for forced discharge, from the forced discharge start voltage Va and the forced discharge end voltage Vb, and carrying out the forced discharge with a constant current value for a constant period of time. The configuration and effects of the control method of an assembled battery according to the twenty-second embodiment are the same as those described in the seventh embodiment.

A control method of an assembled battery according to a twenty-third embodiment is a control method of an assembled battery having a combination of a plurality of cells, wherein, when individually understood state of charge of each cell reaches the forced discharge start state Ca, the cells are caused to forcibly discharge individually until the state of charge thereof reaches the forced discharge end state Cb. The configuration and effects of the control method of an assembled battery according to the twenty-third embodiment are the same as those described in the eighth embodiment.

A control method of an assembled battery according to a twenty-fourth embodiment is, according to the control method of an assembled battery of the twenty-third embodiment, a method for calculating the state of charge of each cell from an initial charge behavior. The configuration and effects of the control method of an assembled battery according to the twenty-fourth embodiment are the same as those described in the ninth embodiment.

A control method of an assembled battery according to a twenty-fifth embodiment is, according to the control method of an assembled battery of the twenty-third or twenty-fourth embodiment, a method for performing forced discharge by using a forced discharge circuit configured by a resistor and a diode, and a switch that connects the cells with the forced discharge circuit on the basis of a forced discharge command. The configuration and effects of the control method of an assembled battery according to the twenty-fifth embodiment are the same as those described in the tenth embodiment.

A control method of an assembled battery according to a twenty-sixth embodiment is, according to the control method of an assembled battery of any one of the twenty-third to twenty-fifth embodiments, a method in which a nonaqueous electrolyte secondary battery is used as each cell. The configuration and effects of the control method of an assembled battery according to the twenty-sixth embodiment are the same as those described in the eleventh embodiment.

A control method of an assembled battery according to a twenty-seventh embodiment is, according to the control method of an assembled battery of the twenty-sixth embodiment, a method that uses a lithium composite oxide that contains cobalt as the positive-electrode active material of the nonaqueous electrolyte secondary battery. The configuration and effects of the control method of an assembled battery according to the twenty-seventh embodiment are the same as those described in the twelfth embodiment.

A control method of an assembled battery according to a twenty-eighth embodiment is, according to the control method of an assembled battery of any one of the twenty-third to twenty-seventh embodiments, a method in which the forced discharge start state Ca is set to at least 86.5% but no more than 95.5% per cell. The configuration and effects of the control method of an assembled battery according to the twenty-eighth embodiment are the same as those described in the thirteenth embodiment.

A control method of an assembled battery according to a twenty-ninth embodiment is, according to the control method of an assembled battery of any one of the twenty-third to twenty-eighth embodiments, a method in which the forced discharge end state Cb is set to at least 68.5% but no more than 77.5% per cell. The configuration and effects of the control method of an assembled battery according to the twenty-ninth embodiment are the same as those described in the fourteenth embodiment.

A control method of an assembled battery according to a thirtieth embodiment is, according to the control method of an assembled battery of any one of the twenty-third to twenty-ninth embodiments, a method for calculating the amount of electricity required for forced discharge, from the forced discharge start state Ca and the forced discharge end state Cb, and carrying out the forced discharge with a constant current value for a constant period of time. The configuration and effects of the control method of an assembled battery according to the thirtieth embodiment are the same as those described in the fifteenth embodiment.

Although an example where a nonaqueous electrolyte secondary battery (specifically, a lithium ion secondary battery) is sued as each cell was described herein, it goes without saying that the same results are achieved by using, from among nonaqueous electrolyte secondary batteries, a lithium polymer secondary battery with a gel-like electrolyte or an alkaline storage battery, a nickel-hydrogen storage battery, or a nickel-cadmium storage battery, as each cell.

A power supply system according to one aspect of the present invention has an assembled battery having a combination of a plurality of cells, a power generator capable of charging the cells, a plurality of forced discharge units capable of causing the cells to forcibly discharge individually, and a controller which, when individually measured voltage of each cell reaches a forced discharge start voltage Va (or when the state of charge of individually understood cell reaches a forced discharge start state Ca), uses the forced discharge units to cause the cells to forcibly discharge until the voltage reaches a forced discharge end voltage Vb (or a forced discharge end state Cb).

A control method according to one aspect of the present invention is a control method of an assembled battery having a combination of a plurality of cells, wherein, when individually measured voltage of each cell reaches the forced discharge start voltage Va (or when individually measured state of charge of each cell reaches the forced discharge start state Ca), the forced discharge units are used to cause the cells to forcibly discharge until the voltage reaches the forced discharge end voltage Vb (or the forced discharge end state Cb).

As with the cell starter power supply, in an assembled battery that needs to constantly accept charging current from a power generator, any of the plurality of cells needs to be ready to accept the charge. However, if each of the cells is so controlled as to avoid overcharge, the variation of SOC between the cells does not need to be concerned or taken into consideration. The present invention has been contrived in view of an assembled battery used in such environment, and in the present invention, when the voltage of each cell reaches the forced discharge start voltage Va (or when the state of charge of individually understood cell reaches the forced discharge start state Ca), the cell is caused to discharge until it reaches a charge acceptable state (in which the voltage reaches approximately the forced discharge end voltage Vb or the SOC reaches approximately the forced discharge end state Cb), so as to prepare to receive charge from the power generator.

### Industrial Applicability

The power supply system and a control method of an assembled battery according to the present invention can be used in a variety of devices that uses an assembled battery, and provide a high degree of usability especially in a cell starter power supply of a racing car.

## Claims

1. A power supply system, comprising:
an assembled battery in which a plurality of cells are connected in series and which supplies power from a series circuit of the cells to a device;
a power generator that parallely supplies generated power to the assembled battery and the device connected in parallel;
a plurality of forced discharge units that cause the plurality of cells to forcibly discharge individually;
a cell state detector that detects a state of each cell; and
a controller which, when the cell state detector detects that at least one of the plurality of cells is in a first state showing that the cell is not fully charged, causes the cell detected to be in the first state to discharge by means of the forced discharge units until the cell state detector detects that the cell enters a second state having a lower state of charge than the first state.

2. The power supply system according to claim 1, wherein each of the forced discharge units has:
a forced discharge circuit in which a series circuit of a resistor and diode is connected with each cell in parallel, wherein the diode is connected in a direction such that discharging current of each cell flows in a forward direction of the diode; and
a switch that is connected with the forced discharge circuit in series and opens/closes the connection between the forced discharge circuit and the cell on the basis of a command from the controller.

3. The power supply system according to claim 1 or 2, wherein the first state is a state where the state of charge of the cell is within the range of 86.5% to 95.5%, and the second state is a state where the state of charge of the cell is within the range of 68.5% to 77.5%.

4. The power supply system according to any one of claims 1 to 3, wherein the cell state detector detects voltage of each cell as the state of the cell, the first state is a state where the voltage of the cell becomes forced discharge start voltage Va that is set in advance to be lower than voltage obtained when the cell is fully charged, and the second state is a state where the voltage of the cell becomes forced discharge end voltage Vb that is set in advance to be lower than the forced discharge start voltage Va.

5. The power supply system according to claim 4, wherein, when the voltage of at least one of the plurality of cells detected by the cell state detector becomes the forced discharge start voltage Va, the controller uses the forced discharge units to cause the cell, whose voltage becomes the forced discharge start voltage Va, to discharge a previously set amount of discharge electricity with a previously set constant current value for a previously set constant period of time, the set amount of discharge electricity being set as an amount of discharge electricity for reducing the voltage of the cell from the forced discharge start voltage Va to the forced discharge end voltage Vb.

6. The power supply system according to claim 2, wherein the cell state detector detects voltage of each cell as the state of the cell, the first state is a state where the voltage of the cell becomes forced discharge start voltage Va that is set in advance to be lower than voltage obtained when the cell is fully charged, the second state is a state where the voltage of the cell becomes forced discharge end voltage Vb that is set in advance to be lower than the forced discharge start voltage Va, and, when the voltage of at least one of the plurality of cells detected by the cell state detector becomes the forced discharge start voltage Va, the controller turns on the switch connected with the forced discharge circuit that is connected in parallel with the cell having the forced discharge start voltage Va, during a set time period that is set in advance as a time period for reducing the voltage of the cell from the forced discharge start voltage Va to the forced discharge end voltage Vb by turning the switch on.

7. The power supply system according to any one of claims 4 to 6, wherein a nonaqueous electrolyte secondary battery is used as the cell.

8. The power supply system according to claim 7, wherein a lithium composite oxide that contains cobalt is used as a positive-electrode active material of the nonaqueous electrolyte secondary battery.

9. The power supply system according to claim 7 or 8, wherein the forced discharge start voltage Va is set within the range of 4.05V to 4.15V per cell.

10. The power supply system according to any one of claims 7 to 9, wherein the forced discharge end voltage Vb is set within the range of 3.85V to 3.95V per cell.

11. The power supply system according to claim 1 or 2, wherein the cell state detector detects the state of charge of each cell as the state of the cell, the first state is a state where the state of charge of the cell becomes forced discharge start state Ca that is set in advance to a state of charge at which the cell is not fully charged, and the second state is a state where the state of charge of the cell becomes forced discharge end state Cb that is set in advance to be less than the forced discharge start state Ca.

12. The power supply system according to claim 11, wherein, when the state of charge of at least one of the cells detected by the cell state detector becomes the forced discharge start state Ca, the controller uses the forced discharge units to cause the cell, whose state of charge becomes the forced discharge start state Ca, to discharge a previously set amount of discharge electricity with a previously set constant current value for a previously set constant period of time, the set amount of discharge electricity being set as an amount of discharge electricity for reducing the state of charge of the cell from the forced discharge start state Ca to the forced discharge end state Cb.

13. The power supply system according to claim 2, wherein the cell state detector detects the state of charge of each cell as the state of the cell, the first state is a state where the state of charge of the cell becomes forced discharge start state Ca that is set in advance to a state of charge at which the cell is not fully charged, the second state is a state where the state of charge of the cell becomes forced discharge end state Cb that is set in advance to be less than the forced discharge start state Ca, and, when the state of charge of at least one of the plurality of cells detected by the cell state detector becomes the forced discharge start state Ca, the controller turns on the switch connected with the forced discharge circuit that is connected in parallel with the cell having the forced discharge start state Ca, during a set time period that is set in advance as a time period for reducing the state of charge of the cell from the forced discharge start state Ca to the forced discharge end state Cb by turning the switch on.

14. The power supply system according to claim 13, wherein the cell state detector has:
a current detector for detecting charging/discharging current flowing through each cell; and
a charge state calculator for calculating the state of charge of the cell by cumulatively adding the charging current and subtracting the discharging current for each of the cells, the charging current and the discharging current being detected by the current detector.

15. The power supply system according to claim 14, wherein the current detector has:
a plurality of current detection resistors that are connected with the plurality of cells in series; and
a current signal detector that acquires voltage between both ends of each of the current detection resistors as a signal indicating the charging/discharging current flowing to the cell,
and that the forced discharge circuits are respectively connected in parallel to a plurality of series circuits configured by the cell and the current detection resistor.

16. The power supply system according to any one of claims 8 to 15, wherein the forced discharge start state Ca is set within the range of 86.5% to 95.5% per cell.

17. The power supply system according to any one of claims 8 to 16, wherein the forced discharge end state Cb is set within the range of 68.5% to 77.5% per cell.

18. A control method of an assembled battery for supplying power to a device from an assembled battery having a plurality of cells connected in series, the control method comprising:
a step in which a power generator parallely supplies generated power to the assembled battery and the device;
a step in which a cell state detector detects a state of each cell; and
a step in which, when the cell state detector detects that at least one of the plurality of cells is in a first state showing that the cell is not fully charged, a controller causes the cell detected to be in the first state to discharge by means of a forced discharge unit until the cell state detector detects that the cell enters a second state having a lower state of charge than the first state.
